# EUROPÄISCHE PATENTANMELDUNG

(11) **EP 2 562 740 A1**
(43) Veröffentlichungstag der Anmeldung: **27.02.2013**
(21) Anmeldenummer: 12178676.8
(22) Anmeldetag: 31.07.2012
(51) Int. Cl.: G09F 21/12, B64D 3/00

(54) **Schleppvorrichtung für ein Werbebanner**

(30) Priorität: 24.08.2011 AT 12132011
(71) Anmelder: Kleinheinz, Willibald Rudolf, 5303 Thalgau (AT)
(72) Erfinder: Kleinheinz, Willibald Rudolf, 5303 Thalgau (AT)
(74) Vertreter: Hübscher, Helmut

(57) **Zusammenfassung**

Es wird eine Schleppvorrichtung für ein Werbebanner (8) mit einem ein Seitenleitwerk (3) aufweisenden Motorflugzeug beschrieben, mit dem das Werbebanner (8) über eine Bannerstange (7) an der vorderen Bannerstirnseite verbunden ist. Um einfache Konstruktionsverhältnisse zu schaffen, wird vorgeschlagen, dass das Motorflugzeug als unbemannter, ferngesteuerter Flugkörper (1) ausgebildet ist, der die Bannerstange (7) am hinteren Ende des Seitenleitwerks (3) trägt.

## Beschreibung

Die Erfindung bezieht sich auf eine Schleppvorrichtung für ein Werbebanner mit einem ein Seitenleitwerk aufweisenden Motorflugzeug, mit dem das Werbebanner über eine Bannerstange an der vorderen Bannerstirnseite verbunden ist.

Zum Schleppen von Werbebannern werden diese mit Hilfe eines Schleppseils an einem Flugzeug befestigt, wobei zum Ausrichten das Werbebanner an seiner vorderen Stirnseite mit einer Bannerstange versehen ist, an der eine aus einem Seilfächer gebildete, mit dem Schleppseil verbundene Bannerspinne angreift. Nachteilig ist allerdings, dass durch das über ein Schleppseil nachgezogene Werbebanner die Flugeigenschaften des meist einmotorigen Motorflugzeugs nachteilig beeinflusst werden und das Aufnehmen des Werbebanners aus der Luft mittels eines Fanghakens unter Umständen mit Gefahren verbunden ist. Es wurde bereits vorgeschlagen (EP 1 411 488 B1), das Werbebanner vor dem Start mit dem Schleppflugzeug zu verbinden und die Bannerstange mit Laufrädern zu versehen, sodass der Propellerwind aufgrund der durch die Laufräder vom Boden abgehobenen Bannerstange unter das Werbebanner strömen und es noch vor dem eigentlichen Start vom Boden abheben kann. Der mit einer solchen Starthilfe verbundene Konstruktionsaufwand verbessert jedoch die Flugeigenschaften des Flugzeugs mit angehängtem Werbebanner nicht.

Der Erfindung liegt somit die Aufgabe zugrunde, eine Schleppvorrichtung für ein Werbebanner so auszubilden, dass ausreichend gute Flugeigenschaften sichergestellt werden können, um unbemannte, ferngesteuerte Flugzeuge einsetzen zu können.

Ausgehend von einer Schleppvorrichtung der eingangs geschilderten Art löst die Erfindung die gestellte Aufgabe dadurch, dass das Motorflugzeug als unbemannter, ferngesteuerter Flugkörper ausgebildet ist, der die Bannerstange am hinteren Ende des Seitenleitwerks trägt.

Der Erfindung liegt die Erkenntnis zugrunde, dass die Verschlechterung der Flugeigenschaften vor allem durch das Schleppen des Banners mittels eines Schleppseils bedingt wird. Entfällt das Schleppseil und wird das Werbebanner mit seiner vorderen Stirnseite am Seitenleitwerk des Flugkörpers derart befestigt, dass es am hinteren Ende des Seitenleitwerks entlang einer Hochachse verschiebefest gehalten wird, so können in einfacher Weise für eine Fernsteuerung des Flugkörpers ausreichende Flugeigenschaften sichergestellt werden, um mit einer vergleichsweise geringen Antriebsleistung einen stabilen Flug auch bei widrigen Windverhältnissen gewährleisten zu können. Mit der Anordnung der Bannerstange am Seitenleitwerk werden außerdem Startschwierigkeiten vermieden, weil durch den Propellerwind des Flugkörpers das Werbebanner bereits vor dem Start in Längsrichtung des Flugkörpers ausgerichtet wird.

Zur Anbringung des Werbebanners am hinteren Ende des Seitenleitwerks entlang einer Hochachse kann das Seitenleitwerk die Bannerstange bilden oder aufnehmen. Besonders vorteilhafte Konstruktionsbedingungen ergeben sich in diesem Zusammenhang, wenn die Bannerstange dem Seitenleitwerk zugeordnet und mit dem Werbebanner lösbar verbunden ist, sodass das Werbebanner zum Auswechseln lediglich von der dem Seitenleitwerk zugehörigen Bannerstange gelöst zu werden braucht. Obwohl sich für eine solche lösbare Verbindung unterschiedliche Konstruktionsmöglichkeiten anbieten, kann eine einfache Handhabung dadurch erreicht werden, dass die Bannerstange eine hinterschnittene Längsnut zur Aufnahme des Werbebanners bildet. Es muss lediglich dafür gesorgt werden, dass das Werbebanner die Längsnut in der Bannerstange entsprechend hintergreift. Zu diesem Zweck können an der vorderen Stirnseite des Werbebanners in die Längsnut der Bannerstange eingreifende Gleiter vorgesehen sein. Günstige Handhabungsbedingungen ergeben sich, wenn das Werbebanner einen vorderen, in die Längsnut der Bannerstange eingreifenden Stirnrandwulst aufweist.

Je stabiler sich das Werbebanner in der Flugströmung verhält, desto bessere Flugeigenschaften können für das aus Flugkörper und Werbebanner gebildete Flugsystem erreicht werden. Aus diesem Grund empfiehlt es sich, das Werbebanner mit einem entlang des oberen Längsrands verlaufenden, aufblasbaren Schlauch zu versehen, der ein Flattern des Werbebanners weitgehend unterdrücken kann und keine Schwierigkeiten beim Zusammenlegen des Werbebanners mit sich bringt. Um nicht nur Gewicht zu sparen, sondern für das Werbebanner auch einen Auftrieb zu verwirklichen, kann der Schlauch mit einem Gas leichter als Luft aufgeblasen werden.

Zur weiteren Stabilisierung des Werbebanners, kann das Werbebanner auch eine untere Längsrandversteifung aufweisen, die aus Gewichtsgründen vorteilhaft eine Kohlenfaserleiste umfasst. Eine solche Kohlenfaserleiste kann in einen umgeschlagenen Saum des Werbebanners eingeschoben werden. Insbesondere mit den vorgeschlagenen Versteifungsmaßnahmen können sehr dünne Werbebanner zum Einsatz kommen, sodass sich der Einsatz von Metallfolien für diesen Zweck anbietet, die große Werbeflächen bei einem geringen Gewicht zur Verfügung stellen und einfach bedruckt werden können.

Schließlich können zur zusätzlichen Stabilisierung der Fluglage des Werbebanners im Bereich des hinteren Endes des Werbebanners V-fömige Stabilisierungsflügel vorgesehen werden, deren Flügelprofil für einen entsprechenden Auftrieb sorgt.

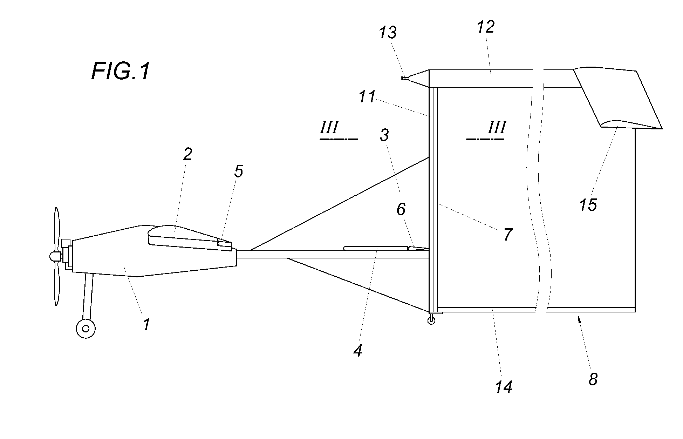

In der Zeichnung ist der Erfindungsgegenstand beispielsweise dargestellt. Es zeigen
- Fig. 1: eine erfindungsgemäße Schleppvorrichtung in einer schematischen Seitenansicht,

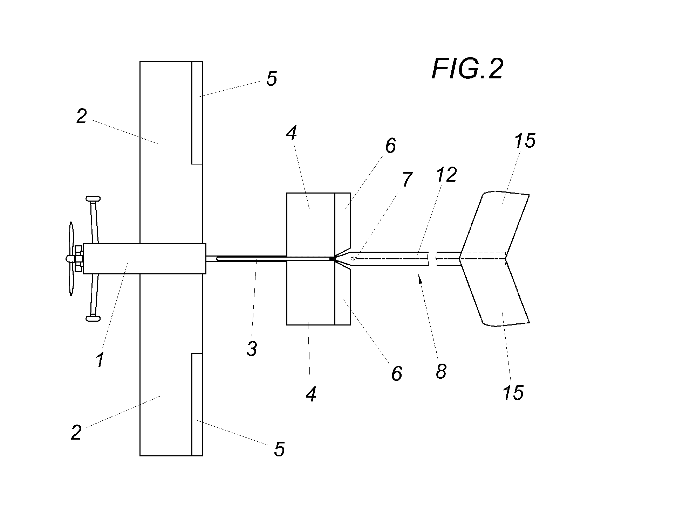

- Fig. 2: diese Schleppvorrichtung in einer Draufsicht in einem kleineren Maßstab,

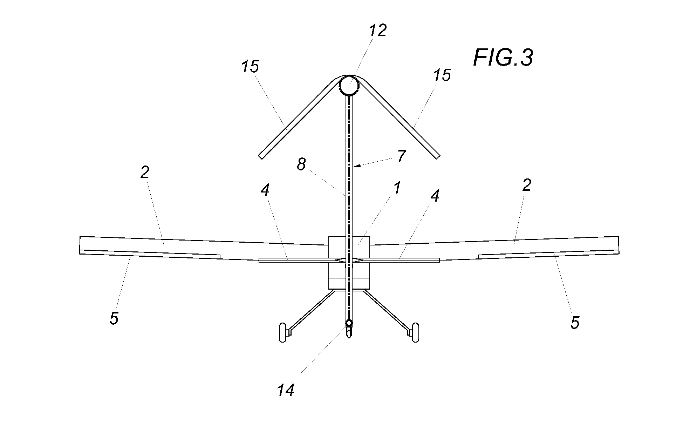

- Fig. 3: die Schleppvorrichtung in einer Ansicht von hinten und
- Fig. 4: einen Schnitt nach der Linie IV-IV der Fig. 1 in einem größeren Maßstab.

Gemäß dem dargestellten Ausführungsbeispiel umfasst die Schleppvorrichtung ein einmotoriges Propellerflugzeug mit einem unbemannten ferngesteuerten Flugkörper 1, der in üblicher Weise Tragflügel 2, ein Seitenleitwerk 3 und ein Höhenleitwerk 4 aufweist. Im dargestellten Ausführungsbeispiel ist das Querruder 3 lediglich mit einer Seitenflosse ohne Seitenruder versehen, was jedoch nicht zwingend ist. Die Seitensteuerung wird in herkömmlicher Weise über die Querruder 5 der Tragflügel 2 und die Höhenruder 6 des Höhenleitwerks 4 vorgenommen.

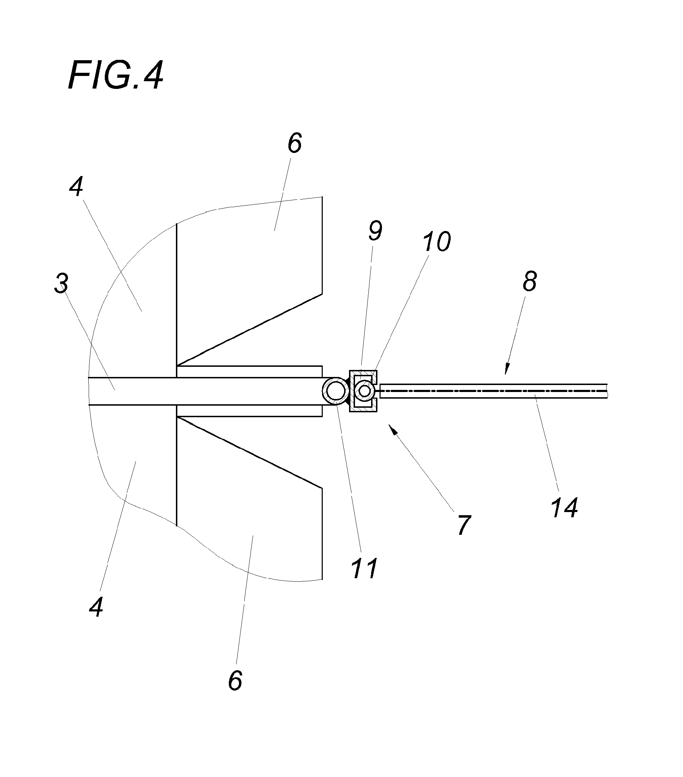

Am hinteren Ende des Seitenleitwerks 3 ist eine entlang einer Hochachse verlaufende Bannerstange 7 vorgesehen, an die wahlweise verschiedene Werbebanner 8 angeschlossen werden können. Zu diesem Zweck kann die dem Seitenleitwerk 3 zugeordnete Bannerstange 7 eine hinterschnittene Längsnut 9 aufweisen, in die das Werbebanner 8 mit einen Stirnrandwulst 10 eingreift, sodass das Werbebanner 8 quer zur Bannerstange 7 zugfest mit dieser verbunden ist, wie dies der Fig. 4 entnommen werden kann. Die Bannerstange 7 wird vorteilhaft durch ein entsprechendes Profil gebildet, das an einem Träger 11 des Seitenleitwerks 3 befestigt ist.

Das Werbebanner 8 weist entlang seines oberen Längsrands einen aufblasbaren Schlauch 12 auf, der an seinem vorderen Ende mit einem Ventil 13 versehen ist, über das der Schlauch 12 aufgeblasen und entleert werden kann. Um vorteilhafte Auftriebsbedingungen für das Werbebanner 8 zu erreichen, kann der Schlauch 12 mit einem Gas leichter als Luft, beispielsweise Helium, gefüllt werden. Zur weiteren Stabilisierung des aus einer Metallfolie gebildeten Werbebanners 8 kann das Werbebanner 8 eine untere Längsrandversteifung 14 vorzugsweise in Form eines Kohlenfaserstabs aufweisen, der in einen umgeschlagenen Saum der Metallfolie eingeschoben werden kann.

Zur weiteren Verbesserung der Flugstabilität des Werbebanners 8 können im Bereich des hinteren Endes des Werbebanners 8 V-förmige Stabilisierungsflügel 15 vorgesehen werden, die aufgrund ihres Flügelprofils für einen zusätzlichen Auftrieb sorgen.

Zufolge der geschilderten Maßnahmen, insbesondere der Zuordnung der Bannerstange 7 zum Seitenleitwerk 3, können für das aus dem Flugkörper 1 und dem Werbebanner 8 gebildete Flugsystem stabile Flugbedingungen bei einer vergleichsweise kleinen Antriebsleistung sichergestellt werden, sodass auch größere Werbebanner 8 mit Hilfe unbemannter, ferngesteuerter Flugkörper 1 sicher geschleppt werden können, was den Einsatz geschleppter Werbebanner einfacher, billiger und gefahrloser macht.

## Patentansprüche

1. Schleppvorrichtung für ein Werbebanner (8) mit einem ein Seitenleitwerk (3) aufweisenden Motorflugzeug, mit dem das Werbebanner (8) über eine Bannerstange (7) an der vorderen Bannerstirnseite verbunden ist, **dadurch gekennzeichnet, dass** das Motorflugzeug als unbemannter, ferngesteuerter Flugkörper (1) ausgebildet ist, der die Bannerstange (7) am hinteren Ende des Seitenleitwerks (3) trägt.

2. Schleppvorrichtung nach Anspruch 1, **dadurch gekennzeichnet, dass** die Bannerstange (7) dem Seitenleitwerk (3) zugeordnet und mit dem Werbebanner (8) lösbar verbunden ist.

3. Schleppvorrichtung nach Anspruch 2, **dadurch gekennzeichnet, dass** die Bannerstange (7) eine hinterschnittene Längsnut (9) zur Aufnahme des Werbebanners (8) bildet.

4. Schleppvorrichtung nach Anspruch 3, **dadurch gekennzeichnet, dass** das Werbebanner (8) einen vorderen, in die Längsnut (9) der Bannerstange (7) eingreifenden Stirnrandwulst (10) aufweist.

5. Schleppvorrichtung nach einem der Ansprüche 1 bis 4, **dadurch gekennzeichnet, dass** das Werbebanner (8) einen entlang des oberen Längsrands verlaufenden, aufblasbaren Schlauch (12) aufweist.

6. Schleppvorrichtung nach Anspruch 5, **dadurch gekennzeichnet, dass** der Schlauch (12) mit einem Gas leichter als Luft aufblasbar ist.

7. Schleppvorrichtung nach einem der Ansprüche 1 bis 6, **dadurch gekennzeichnet, dass** das Werbebanner (8) eine untere Längsrandversteifung (14) aufweist.

8. Schleppvorrichtung nach Anspruch 7, **dadurch gekennzeichnet, dass** die untere Längsrandversteifung (14) eine Kohlenfaserleiste umfasst.

9. Schleppvorrichtung nach einem der Ansprüche 1 bis 8, **dadurch gekennzeichnet, dass** das Werbebanner (8) aus einer Metallfolie gebildet ist.

10. Schleppvorrichtung nach einem der Ansprüche 1 bis 9, **dadurch gekennzeichnet, dass** im Bereich des hinteren Endes des Werbebanners (8) V-fömige Stabilisierungsflügel (15) vorgesehen sind.
